# EUROPÄISCHE PATENTSCHRIFT

(11) **EP 0 832 041 B1**
(45) Veröffentlichungstag und Bekanntmachung des Hinweises auf die Patenterteilung: **11.04.2001**
(21) Anmeldenummer: 96920778.6
(22) Anmeldetag: 03.06.1996
(51) Int. Cl.: C01G 41/00

(54) **VERFAHREN ZUR HERSTELLUNG VON NATRIUMWOLFRAMAT**
SODIUM TUNGSTATE PREPARATION PROCESS
PROCEDE DE PREPARATION DE TUNGSTATE DE SODIUM

(30) Priorität: 12.06.1995 DE 19521333
(43) Veröffentlichungstag der Anmeldung: 01.04.1998
(73) Patentinhaber: H.C. Starck GmbH & Co. KG, 38642 Goslar (DE)
(72) Erfinder: LOHSE, Michael, D-38640 Goslar (DE)
(74) Vertreter: Drope, Rüdiger, Dr.
(86) Internationale Anmeldenummer: EP9602399
(87) Internationale Veröffentlichungsnummer: WO9641768

(56) Entgegenhaltungen:
- FR-A- 2 051 650
- US-A- 1 800 758

## Beschreibung

Die vorliegende Erfindung betrifft Verfahren zur Herstellung von Natriumwolframat durch oxidierende Umsetzung von Hartmetall- und/oder Schwermetallschrotten in einer Salzschmelze.

Verfahren zur Aufarbeitung von Hartmetall- (WC-Co bzw. WC-Co-TaC-TiC) sowie Schwermetallschrotten (W-Cu-Ni-Fe) sind in zahlreichen Patentveröffentlichungen beschrieben. Bekannt sind u.a. die Oxidation von Hartmetallabfällen bei höheren Temperaturen (US-A 3 887 680), das Behandeln mit flüssigem Zink (US-A 3 595 484) oder das anodische Herauslösen des Binders (AT-A 380 495). Diese Verfahren sind entweder apparativ aufwendig oder nur für bestimmte Schrottarten geeignet.

Daneben spielt großtechnisch die Umsetzung von Hartmetallschrotten in Salzschmelzen eine bedeutende Rolle.

So beschreibt die US-A 4 603 043 die Aufarbeitung W-haltiger Materialien in einer Salzschmelze bestehend aus NaNO₃ und NaOH bei Temperaturen von 500-700°C. Dabei werden zur besseren Kontrolle der Reaktion zunächst NaOH und die W-haltige Komponente auf 560-600°C erhitzt. Das als Oxidationsmittel erforderliche NaNO₃ wird anschließend im Laufe von 2-3 Stunden zugegeben.

Nach der DE-A 314 495 wird die Aufarbeitung von Hartmetallschrotten ebenfalls in einer Alkalihydroxid/Alkalinitratschmelze durchgeführt, in einer Salzschmelze bestehend aus 40-80 % Alkalinitrat und 20-60 % Alkalihydroxid. Zur Herabsetzung des Schmelzpunktes werden 5 % NaCl zugegeben. Die Schmelztemperatur beträgt 550°C. Die Schmelze wird anschließend in Wasser gegossen.

DD-A 207 932 offenbart die Aufarbeitung von Hartmetallschrotten in reinen Natriumnitrat- bzw. -nitritschmelzen. Der stöchiometrische Überschuß der Alkalikomponente soll dabei 10-15 %, die Schmelztemperatur 900°C betragen. Die umgesetzte Schmelze wird auf Raumtemperatur abgekühlt, bevor man sie in Wasser löst.

Eine Salzschmelze aus Alkalihydroxid, vorzugsweise KOH oder NaOH, sowie einem Alkalinitrat als Oxidationsmittel, vorzugsweise KNO₃ bzw. NaNO₃, wird gemäß der IN-A 157 146 zur Aufarbeitung von Hartmetallschrotten eingesetzt. Die Schmelztemperatur variiert zwischen 350-460°C. Dabei wurde festgestellt, daß bei 400-420°C die W-Ausbeuten 90-94 % betragen. Bei 440-460°C kann die W-Ausbeute auf 99 % gesteigert werden. Die Reaktion ist in diesem Fall nur noch schwer kontrollierbar. Außerdem tritt die Emission von Stickoxiden auf.

Der Nachteil aller Umsetzungen in Nitrat und/oder Nitritmedien liegt darin, daß die stark exotherme Reaktion schwer beherrschbar ist. Damit ist die gesamte Umsetzung sicherheitstechnisch als problematisch anzusehen. Hinzu kommt eine oftmals nicht kontrollierbare Emission nitroser Gase. Nitrit- und Nitratgehalte in der Natriumwolframatlösung sowie in den Filtrationsrückständen machen eine Aufarbeitung, wenn anschließend eine Solvent-Extraktion durchgeführt werden muß, äußerst schwierig.

Aufgabe der vorliegenden Erfindung ist es daher, ein Verfahren zur Aufarbeitung von Hartmetall- sowie Schwermetallstückschrotten zur Verfügung zu stellen, welches die beschriebenen Nachteile nicht aufweist.

Diese Aufgabe wurde erfindungsgemäß dadurch gelöst, daß wolframhaltige Schrotte unterschiedlicher Zusammensetzung in einer Salzschmelze, bestehend aus NaOH und Na₂SO₄ oxidierend aufgearbeitet werden.

Gegenstand dieser Erfindung ist somit ein Verfahren zur Herstellung von Natriumwolframat durch oxidierende Umsetzung von Hartmetall und/oder Schwermetallschrotten in einer Salzschmelze, dadurch gekennzeichnet, daß eine Salzschmelze bestehend aus 60 bis 90 Gew.-% NaOH und 10 bis 40 Gew.-% Na₂SO₄ eingesetzt wird.

Bevorzugt wird dabei die Umsetzung in einer bewegten Schmelze, besonders bevorzugt in einem chargenweise betriebenen direkt befeuerten Drehrohr-Ofen durchgeführt. Als Schleißmasse sollte der Drehrohr-Ofen mit einer feuerfesten Masse ausgekleidet sein. Die Oxidation erfolgt vorteilhaft durch das Einblasen von Luft in die Schmelze. Technisch sinnvoll wird die Umsetzung bei Temperaturen zwischen 800 und 1100°C durchgeführt. Besonders gute Aufschlußdaten werden erreicht, wenn die Umsetzung mit einem 5-20 gew.-%igen Überschuß an Alkalikomponenten durchgeführt wird.

Das erfindungsgemäße Verfahren wird weiterhin erläutert, ohne daß dadurch eine Einschränkung der Erfindung zu sehen ist.

Nach der Verflüssigung der Schmelze wird die Energiezufuhr abgestellt und 4-8 Stunden unter Einblasen von Luft und Drehen des Ofens die Umsetzung durchgeführt. Der Wolframinhalt aus den W-haltigen Materialien geht dabei direkt in Natriumwolframat über.

Eine weitere Energiezufuhr ist nicht erforderlich; die Reaktion kann ausschließlich durch die eingeblasenen Luftvolumina gesteuert werden. Nach abgeschlossener Reaktion wird die Na₂WO₄-Schmelze über spezielle Trichter direkt in Wasser eingetragen. Natriumwolframat geht augenblicklich in Lösung und kann nach den üblichen Verfahren zu Wolframcarbidpulver aufgearbeitet werden.

Die übrigen, im Einsatzmaterial vorhandenen Komponenten wie Co, TiC, TaC bzw. Fe, Ni, Cu verbleiben im Rückstand und können ebenfalls nach bekannten Verfahren aufgearbeitet werden.

Ein Vorteil des erfindungsgemäßen Verfahrens besteht darin, daß die Reaktion in einer NaOH/Na₂SO₄-Schmelze schwach exotherm ist. Durch das Einblasen von Luft ist die gesamte Umsetzung gut steuerbar, d.h. vom sicherheitstechnischen Standpunkt unproblematisch.

Ein weiterer Vorteil besteht darin, daß die zum Einsatz gelangten Alkaliverbindungen keinerlei negative Einflüsse auf die weitere Verarbeitung der Wertkomponenten haben.

Außerdem tritt bei dieser Umsetzung keine unkontrollierbare Emission von Reaktionsgasen auf.

Im folgenden wird das erfindungsgemäße Verfahren beispielhaft erläutert, ohne daß hierin eine Einschränkung zu sehen ist.

### Beispiel 1

1000 kg Hartmetall-Stückschrott der Zusammensetzung 84 % WC, 9 % Co, 4 % TaC, 3 % TiC wurden zusammen mit 400 kg NaOH und 150 kg Na₂SO₄ in einen mit einer Feuerfestmasse ausgekleideten, batchweise betriebenen Drehrohr-Ofen eingetragen und auf ca. 900°C erhitzt. Nach Abschluß der Umsetzung nach 6 Stunden wurde die Schmelze in ca. 5 m³ Wasser eingetragen und ausgelaugt. Nach der Filtration verblieben die Co-, Ti-, Ta-Anteile im Rückstand, während das Wolfram als Natriumwolframat ins Filtrat ging und nach den üblichen Verfahren zu Ammoniumparawolframat aufgearbeitet wurde.

Die W-Aufschlußausbeute lag bei 86,3 %.

### Beispiel 2

Es wurde wie in Beispiel 1 beschrieben vorgegangen.

Zusätzlich wurden während der sechsstündigen Lösereaktion 60 m³ Luft/Stunde durch die Schmelze geblasen. Die Aufarbeitung erfolgte wie in Beispiel 1 beschrieben.

Die Aufschlußausbeute lag bei 89,5 %.

### Beispiel 3

1000 kg Hartmetallstückschrott wurden zusammen mit 400 kg NaOH und 250 kg Na₂SO₄ - wie in Beispiel 1 beschrieben - geschmolzen und aufgearbeitet.

Die W-Auschlußausbeute betrug 91,5 %.

### Beispiel 4

1000 kg Hartmetallstückschrott wurden mit 400 kg NaOH und 150 kg Na₂SO₄ wie in Beispiel 1, jedoch ohne Bewegung der Schmelze aufgeschlossen und verarbeitet.

Die W-Aufschlußausbeute betrug 75,1 %.

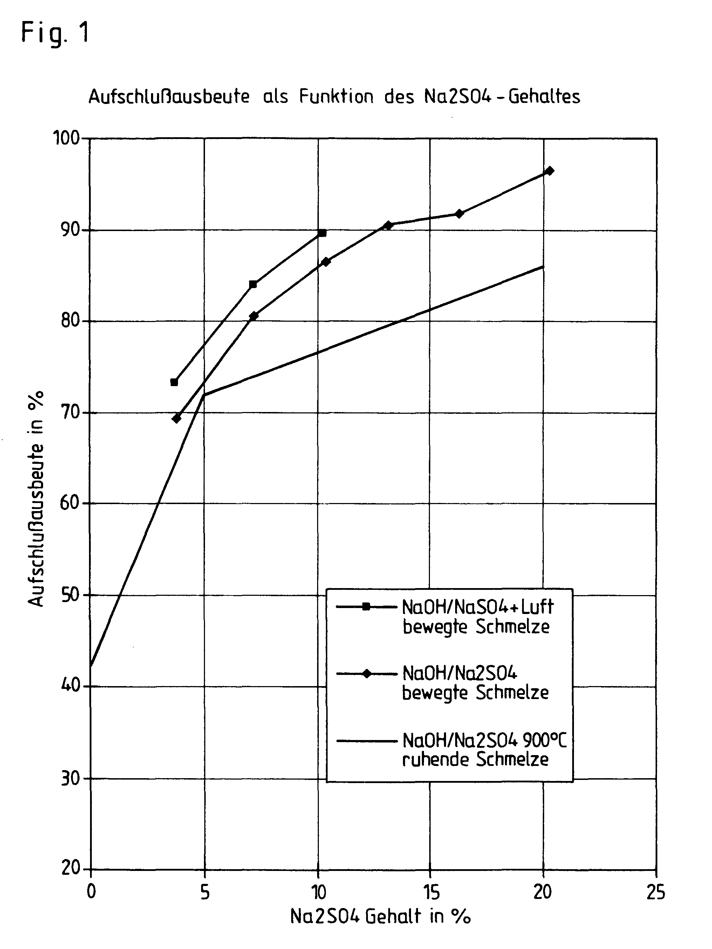

Die in dem Beispiel gewählten Schmelzparameter sowie die Aufschlußausbeuten als Funktion des Na₂SO₄-Gehaltes sind in Fig. 1 dargestellt.

## Patentansprüche

1. Verfahren zur Herstellung von Natriumwolframat durch oxidierende Umsetzung von Hartmetall und/oder Schwermetallschrotten in einer Salzschmelze, dadurch gekennzeichnet, daß eine Salzschmelze bestehend aus 60 bis 90 Gew.-% NaOH und 10 bis 40 Gew.-% Na₂SO₄ eingesetzt wird.

2. Verfahren gemäß Anspruch 1, dadurch gekennzeichnet, daß die Umsetzung in einer bewegten Schmelze vorgenommen wird.

3. Verfahren gemäß einem der Ansprüche 1 oder 2, dadurch gekennzeichnet, daß die Umsetzung in einem chargenweise betriebenen direkt befeuerten Drehrohr-Ofen durchgeführt wird.

4. Verfahren gemäß einem oder mehreren der Ansprüche 1 bis 3, dadurch gekennzeichnet, daß in die Schmelze Luft eingeblasen wird.

5. Verfahren gemäß einem oder mehreren der Ansprüche 1 bis 4, dadurch gekennzeichnet, daß die Umsetzung bei Temperaturen zwischen 800 und 1100°C vorgenommen wird.

6. Verfahren gemäß einem oder mehreren der Ansprüche 1 bis 5, dadurch gekennzeichnet, daß die Umsetzung mit einem 5-20 gewichtsprozentigen Überschuß an Alkalikomponenten durchgeführt wird.

## Claims

1. Method for the preparation of sodium tungstate by the oxidation of hard metal scrap and/or heavy metal scrap in a molten salt, characterised in that a molten salt consisting of from 60 to 90 wt.% of NaOH and from 10 to 40 wt.% of Na₂SO₄ is used.

2. Method according to claim 1, characterised in that the reaction is carried out in a moving melt.

3. Method according to one of claims 1 or 2, characterised in that the reaction is carried out in a batchwise operated directly fired rotary kiln.

4. Method according to one or more of claims 1 to 3, characterised in that air is blown into the melt.

5. Method according to one or more of claims 1 to 4, characterised in that the reaction is carried out at temperatures of between 800 and 1100°C.

6. Method according to one or more of claims 1 to 5, characterised in that the reaction is carried out using a 5 to 20 wt.% excess of alkali components.

## Revendications

1. Procédé pour la préparation de tungstate de sodium par réaction oxydante de débris de métaux durs et/ou de métaux lourds dans une masse de sel en fusion, caractérisé en ce que l'on utilise une masse de sel en fusion constituée de 60 à 90% en poids de NaOH et de 10 à 40% en poids de Na₂SO₄.

2. Procédé selon la revendication 1, caractérisé en ce que l'on procède à la réaction dans une masse en fusion en mouvement.

3. Procédé selon l'une quelconque des revendications 1 ou 2, caractérisé en ce que l'on réalise la réaction dans un four rotatif chauffé directement, à fonctionnement discontinu.

4. Procédé selon l'une ou plusieurs quelconques des revendications 1 à 3, caractérisé en ce que l'on souffle de l'air dans la masse en fusion.

5. Procédé selon l'une ou plusieurs quelconques des revendications 1 à 4, caractérisé en ce que l'on procède à la réaction à des températures comprises entre 800 et 1 100°C.

6. Procédé selon l'une ou plusieurs quelconques des revendications 1 à 5, caractérisé en ce que l'on réalise la réaction avec un excès de 5-20% en poids en constituants d'alcalis.
